# EUROPEAN PATENT SPECIFICATION

(11) **EP 3 831 782 B1**
(45) Date of publication and mention of the grant of the patent: **05.06.2024**
(21) Application number: 20211033.4
(22) Date of filing: 01.12.2020
(51) Int. Cl.: C02F 3/04, E03F 1/00

(54) **SEPTIC WATER DISTRIBUTION PIPE**
KLÄRWASSERVERTEILUNGSROHR
CONDUIT DE DISTRIBUTION D'EAU SEPTIQUE

(30) Priority: 03.12.2019 SE 1951387
(43) Date of publication of application: 09.06.2021
(73) Proprietor: FANN VA-Teknik AB, 183 14 Täby (SE)
(72) Inventor: Ambrosson, Joakim, 182 34 Danderyd (SE); Lans, Martin, 741 46 Knivsta (SE); Andskär, Rikard, 196 36 Kungsängen (SE)
(74) Representative: Brann AB

(56) References cited:
- US-A- 5 516 229
- US-A- 5 520 481
- US-A1- 2004 253 054

## Description

### Field of the invention

The present invention relates to the treatment of domestic septic water, and more particularly to a septic water distribution pipe as well as a domestic septic tank system.

### Background of the invention

Water from a domestic septic tank system contains fat, organic matter, particles, dissolved ammonium, pathogens etc. and needs to be treated prior to being returned to the groundwater. This is normally done in two sequential steps:
1. Mechanical treatment, e.g. in a sludge well, a three-chambered treatment tank etc., wherein fat and solid particles are separated out.
2. Biological treatment, i.e. an infiltration station wherein the water is filtrated into the ground. In this step the water is purified from organic matter, dissolved ammonium etc.

The biological treatment step generally comprises a septic water distribution pipe and a treatment bed, e.g. a tile-bed, soil layers etc. In this step the septic water needs to be aerated in order to be purified, aeration oxidize ammonium to nitrate and cleanses the water of organic matter by converting it into carbon dioxide and water.

The function of a septic water distribution pipe is to distribute the water from the mechanical treatment over the treatment bed evenly through the length of the septic water distribution pipe, in order to avoid flooding or pooling in the treatment bed which can lead to incomplete treatment of the water.

US 6,270,661 B1 disclose a system for infiltrating water into the ground where the water may be received from a domestic tank system and wherein the apparatus includes a discharge pipe with a degree of structural flexibility and drain-holes.

WO 03/03559 A1 disclose an in-pipe wastewater treatment system wherein the wastewater undergoes aeration in a treatment-pipe. Open-cell foam serves as treatment material, in the treatment pipe, and promotes attachment of microbial colonies.

US 5,516,229 A discloses a drain field and a drain field assembly for use with a sewage disposal system that do not require the use of aggregate in the form of rock, gravel, shale, or the like. The assembly contains a distribution pipe having a plurality of holes along its bottom half for receiving liquid effluent. Alongside and beneath the distribution pipe are positioned a plurality of void pipes that serve to retain and distribute the effluent received from the distribution pipe. US 5,520,481 A discloses a similar system.

Today, household generally consume less water but more fat resulting in less water and more fat in the septic water. It is therefore a need for a septic water distribution pipe that enables an improved distribution of the water from the mechanical treatment over a treatment bed.

### Summary of the invention

The object of the invention is to provide a distribution pipe that overcomes the drawbacks of prior art. This is achieved by the distribution pipe as defined in claim 1 and the system as defined in claim 11.

In a first aspect of the invention there is a septic water distribution pipe comprising an interior chamber and an entry port, an outer surface and an inner surface formed by the interior chamber, the septic water distribution pipe is during use adapted to be mounted above a treatment bed and to receive septic water via the entry port and to aerate and distribute the septic water onto the treatment bed. The septic water distribution pipe is configured with a side arranged to during use face the treatment bed and with a vertical axis during use arranged to be perpendicular to regards to the upper surface of the treatment bed, and a horizontal axis perpendicular to the vertical symmetry axis. The septic water distribution pipe comprises:
- at least one pair of over-flow holes positioned at a second position along the longitudinal axis of the septic water distribution pipe, each of the over-flow holes extending from the outer surface to the inner surface of the septic water distribution pipe and arranged so that in a cross-section at the second position of the septic water distribution pipe, the pair of over-flow holes each are at approximately 90 ± 10° in respect to and on each side of the vertical axis;
- at least a pair of aeration holes positioned at a first position along the longitudinal axis of the septic water distribution pipe, each of the aeration holes extending from the outer surface to the inner surface of the septic water distribution pipe and arranged so that in a cross-section at the first position of the septic water distribution pipe, the pair of aeration holes are positioned at 45 ± 10° in respect to the horizontal axis at the half of the septic water distribution pipe that during use is arranged to be facing away from the treatment bed; and
- at least a pair of drainage holes positioned at the first position along the longitudinal axis of the septic water distribution pipe, each of the drainage holes extending from the outer surface to the inner surface of the septic water distribution pipe and arranged so that in a cross-section at the first position of the septic water distribution pipe, the pair of drainage holes are positioned at 45 ± 10° in respect to the horizontal axis at the half of the septic water distribution pipe that during use is arranged to be facing the treatment bed.

In one aspect of the invention the septic water distribution pipe further comprises at least one additional aeration hole and at least one additional drainage hole positioned at a third position along the longitudinal axis C of the septic water distribution pipe, the aeration hole and the drainage holes extending from the outer surface to the inner surface of the septic water distribution pipe and arranged so that in a cross-section at the third position of the septic water distribution pipe, the aeration holes and the pair of drainage holes each are at approximately 90 ± 10° in respect to and on each side of the horizontal axis.

In one aspect of the invention the septic water distribution pipe are the additional aeration hole and additional the drainage hole are positioned at the second position, in the same plane as cross-section.

In one aspect of the septic water distribution pipe are the first position and the second position positioned at a distance of at least 5-30 cm a part along the longitudinal axis of the septic water distribution pipe.

Thanks to the invention the septic water distribution pipe will empty faster as compared to conventional septic water distribution pipes which enable a faster supply of air to the treatment bed.

It is a further advantage with the invention that the aeration is better as compared to conventional septic water distribution pipes.

In one aspect of the invention there is a septic water distribution pipe wherein the outer surface is corrugated.

One advantage with the invention is that it will enable a certain degree of flexibility to the septic water distribution pipe.

In one aspect of the invention there is a septic water distribution pipe wherein the inner surface is smooth.

An advantage with the invention it does it does not allow for water to stay inside the septic water distribution pipe. This avoids freezing of water inside the septic water distribution pipe, something which may block the through-holes holes and hence, the drainage. It also reduces the formation and gathering of solids inside the septic water distribution pipe.

In one aspect of the invention there is a septic water distribution pipe wherein the diameter of the outer surface of the septic water distribution pipe at positions comprising aeration holes is smaller than the average outer surface diameter of the septic water distribution pipe.

It is an advantage with the invention that the septic water distribution pipe may be covered with e.g. a ground cloth in which case there will be an air pocket above the aeration holes that, hence, will be protected from being blocked by soil etc.

In one aspect of the invention there is a septic water distribution pipe 14 according to any of the preceding claims wherein the over-flow holes, aeration holes and distribution holes at the inner surface of the septic water distribution pipe are deburred.

It is one advantage with the invention that no burrs are located inside the septic water distribution pipe since burrs tend to interfere with complete draining and may provide basis for organisms (slime) or particles to collect and accumulate.

In one aspect of the invention there is a septic water distribution pipe wherein the diameter of the septic water distribution pipe is 80-120 mm.

In one aspect of the invention there is a septic water distribution pipe wherein the diameter of the over-flow holes are 10-20 mm.

In one aspect of the invention there is a septic water distribution pipe wherein the diameter of the aeration holes and drainage holes are 5-15 mm.

In one aspect of the invention there is a septic water distribution pipe wherein the septic water distribution pipe comprises at least 20 through-holes per meter, and wherein the through-holes comprises over-flow holes, aeration holes and distribution holes.

In one aspect of the invention there is a domestic septic tank system comprising a septic water distribution pipe, and a treatment bed wherein the septic water distribution pipe is configured with a side facing the treatment bed and with a vertical axis arranged to be perpendicular to the upper surface of the treatment bed.

In the following, the invention will be described in more detail, by way of example only, with regard to non-limiting embodiments thereof, reference being made to the accompanying drawings.

### Brief description of the drawings

Fig. 1 is a schematic illustration of a domestic septic tank system having means for infiltrating the treated water into the ground; and
Fig. 2 a-c are schematic illustrations of a septic water distribution pipe according to the invention wherein a) is a schematic illustration of a septic water distribution pipe of the invention; and b) is a cross-section A at a first position; a cross-section B at a second position; and a cross-section D at a third position, of a septic water distribution pipe of the invention.

### Detailed description

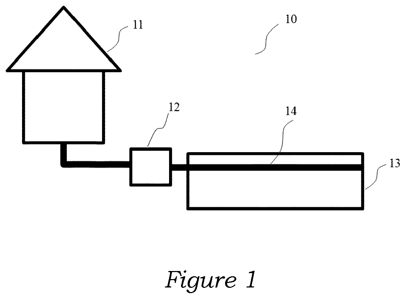

As described in the background the septic water distribution pipe according to the invention may be part of a domestic septic tank system 10 as the one illustrated in Figure 1, comprising a household 11, a mechanical treatment tank 12, a treatment bed 13 and a septic water distribution pipe 14. Treated water from the mechanical treatment tank 12 is collected in a septic water distribution pipe 14 in which the septic water is aerated and distributed onto the treatment bed 13.

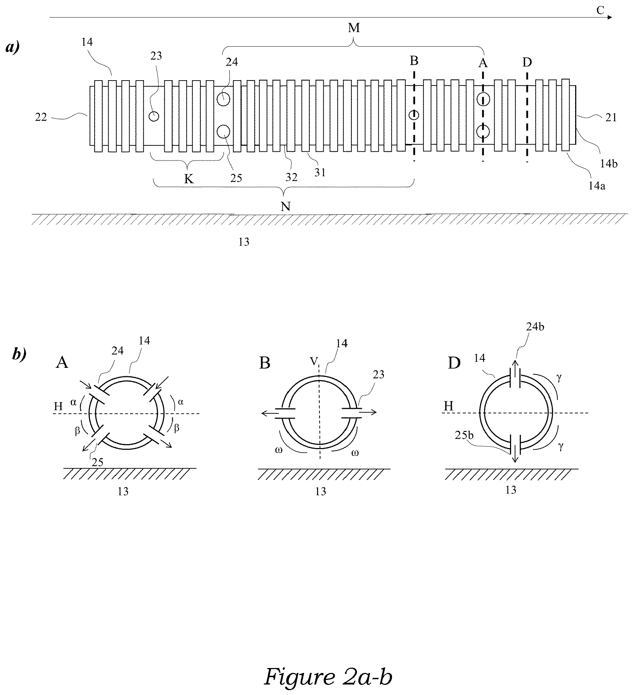

The septic water distribution pipe 14 according to the invention is schematically illustrated in Figs. 2a and b, wherein (a) is a side view of a distribution pipe 14 mounted above a treatment bed 13, (b) is a cross-section A at a first position, a cross-section B at a second position, and a cross-section D at a third position of a septic water distribution pipe according to the invention. Such a septic water distribution pipe 14 comprises a pipe having an interior chamber 21, an entry port 22, an outer surface 14a and an inner surface 14b formed by the interior chamber 21. The septic water distribution pipe 14 is provided with a plurality of through-holes extending from the outer surface 14a to the inner surface 14b of the septic water distribution pipe 14 which are drilled through the septic water distribution pipe 14 and positioned along the longitudinal axis C of the septic water distribution pipe 14. The through-holes comprise over-flow holes 23, aeration holes 24 and distribution holes 25. The septic water distribution pipe 14 may be open at one end or at both ends.

The septic water distribution pipe 14 is during use adapted to be mounted above a treatment bed 13 and to receive septic water via the entry port 22 and to aerate and distribute the septic water onto the treatment bed 13. The septic water distribution pipe 14 is configured with a side arranged to during use face the treatment bed 13 and with a vertical axis V arranged to be perpendicular to the upper surface of the treatment bed 13. In order to ensure and simplify that the position of the septic water distribution pipe 14 on top of the treatment bed 13 turn out to correct during installation of the septic water distribution pipe 14, a mark is usually drawn at the outer surface 14a of the septic water distribution pipe 14 along the longitudinal axis C of the septic water distribution pipe 14. Such a mark should be facing upwards after installation, away from the treatment bed 13.

That the vertical axis V is arranged to be perpendicular to the upper surface of the treatment bed 13 is to be interpreted as an indication of how the distribution pipe 14 is to be arranged in relation to the treatment bed 13. The skilled person understands that it is a general indication with the expected deviations for a pipe that is placed on top of gravel, or a treatment bed.

During use the septic water distribution pipe 14 is attached at both ends to other means that are part of the domestic septic tank system 10.

The septic water distribution pipe 14 according to the invention comprises a pair of drainage holes 25 positioned at a first position along the longitudinal axis C of the septic water distribution pipe 14 as illustrated in Figure 2a and b. Each of the drainage holes 25 extends from the outer surface 14a to the inner surface 14b of the septic water distribution pipe 14 and arranged so that in a cross-section A at the first position of the septic water distribution pipe, the pair of drainage holes 25 are positioned at an angle, β, that is -45 ± 10° in respect to the horizontal axis H so that the drainage holes 25 will face the treatment bed 13 during use. When water enters the septic water distribution pipe 14 it drains through the drainage holes 25 and onto the treatment bed 13.

The septic water distribution pipe 14 according to one embodiment of the invention further comprises a pair of over-flow holes 23 positioned at a second position along the longitudinal axis C of the septic water distribution pipe 14 as illustrated in Figure 2a and b. Each of the over-flow holes 23 extends from the outer surface 14a to the inner surface 14b of the septic water distribution pipe 14 and arranged so that in a cross-section B at the second position of the septic water distribution pipe 14, the pair of over-flow holes 23 each are at an angle, ω, that is approximately 90 ± 10° in respect to and on each side of the vertical axis V. In the case of a large flow of water into the septic water distribution pipe 14 the water will drain through the over-flow holes 23 as well through the drainage holes 25.

The septic water distribution pipe 14 according to one embodiment of the invention further comprises a pair of aeration holes 24 positioned at the first position along the longitudinal axis C of the septic water distribution pipe 14 as illustrated in Figure 2a and b. Each of the aeration holes 24 extends from the outer surface 14a to the inner surface 14b of the septic water distribution pipe 14 and arranged so that in a cross-section A at the first position of the septic water distribution pipe, the pair of aeration holes 24 are positioned at angle, a, that is +45 ± 10° in respect to the horizontal axis H so that the aeration holes 24 will be directed away from the treatment bed 13 during use. The aeration holes 24 allow for air to enter the septic water distribution pipe 14 and come in contact with the water. Aeration of the septic water is important for the microorganisms in the septic water that in turn are necessary in order to purify the septic water. The microorganisms in the septic water convert the organic matter contained in the septic water to carbon dioxide and water as part of the treatment process. According to the embodiment depicted in Figure 2a and b the pair of aeration holes 24 is provided in the same plane, cross section A, as the drainage holes 25. Alternatively, the pair of aeration holes 24 is provided in a different plane/cross section than the drainage holes 25 (not shown). However, it is advantageous to provide the pair of aeration holes 24 in close proximity to the drainage holes 25 in order to facilitate the aeration. Preferably the distance between adjacent pair of aeration holes 24 and drainage holes 25 in the longitudinal direction C of the distribution pipe 14 is less than 25 cm, preferably less than 10 cm and even more preferably less than 5 cm.

The septic water distribution pipe 14 according to one embodiment of the invention further comprises an additional aeration hole 24b and an additional drainage hole 25b positioned at a third position along the longitudinal axis C of the septic water distribution pipe 14 as illustrated in Figure 2a and b. The additional aeration hole 24b and additional drainage hole 25b extends from the outer surface 14a to the inner surface 14b of the septic water distribution pipe 14. The through-holes at the third position, i.e. the additional aeration hole 24b and the additional drainage hole 25b are arranged so that in a cross-section D at the third position of the septic water distribution pipe 14. The additional aeration hole 24b is at an angle, γ, that is approximately +90 ± 10° in respect to the horizontal axis H, and the additional drainage hole 25b is at an angle, γ, that is approximately -90 ± 10° in respect to the horizontal axis H.

In one embodiment, the additional aeration hole 24b and the additional drainage hole 25b are positioned at the second position so that they are comprised in the same plane as cross-section B. In an alternative embodiment the additional aeration holes 24b and the additional drainage holes 25b are positioned at the first position so that they are comprised in the same plane as cross-section A. Preferably, they are positioned at the second position, and i.e. comprised in the same plane as cross-section B. In order to have a good structural stability of the septic water distribution pipe 14 the total number of through-holes, i.e. the over-flow holes 23, the aeration holes 24; 24b, and the drainage holes 25, 25b, in each plane/cross-section should not be too large, e.g. not more than four.

The aeration holes 24; 24b, the pair of over-flow holes 23 and the drainage holes 25; 25b in the above described relative configurations are repeated along the distribution pipe 14. The total number of through-holes i.e. the over-flow holes 23, the aeration holes 24; 24b, and the drainage holes 25, 25b, at the septic water distribution pipe 14 need to be adapted to the amount of received septic water and the expected fluctuations: too many through-holes 23; 24; 24b; 25; 25b may result in local pooling or flooding at certain locations of the treatment bed 14 which can lead to incomplete, or improper treatment of the water. On the other hand to few will lead to too slow emptying of the septic water which could cause accumulation of microorganism and slime. The skilled person, given the information about the whole configurations described herein and with knowledge about expected requirements on system, will without undue burden be capable of selecting an appropriate number of through-holes and/or their periodicity along the septic water distribution pipe 14. The through-holes 23; 24; 24b; 25; 25b are preferably distributed evenly alongside the longitudinal axis C of the septic water distribution pipe 14.

In one embodiment the septic water distribution pipe 14 comprises at least two pairs of over-flow holes 23 at a distance of L from each other, and at least one pair of aeration holes 24; and at least two pairs of drainage holes 25; 25b in the same cross-section at a distance of M from each other. In one embodiment L=M. In one embodiment L=30-60 cm and M=30-60 cm. The distances M and L should be adapted to give an even distribution of septic water over the treatment bed 13. A too short distance M will result in an uneven distribution of septic water over the treatment bed 13 so that a too large portion of the septic water will reach the first part of the treatment bed 13. A too long distance M may result in a too slow emptying of the septic water distribution pipe 14, that in turn can result in stagnation of the septic water inside the septic water distribution pipe 14 which may enable accumulation of microorganism and slime. The distance K between the pairs of over-flow holes 23, and pairs of aeration holes 24; 24b and pairs of drainage holes 25; 25b is in one embodiment 5-30 cm.

The diameter of the septic water distribution pipe 14 and the through-holes 23; 24; 24b; 25; 25b may be varied depending on the expected flow, flow rate, type of water etc. In one embodiment the septic water distribution pipe 14 is 50-150 mm, preferably 100-120 mm in diameter, the drainage holes 25; 25b are 5-15 mm, preferably 8-12 mm in diameter, the over-flow holes 23 are 10-20 mm, preferably 12-16 mm in diameter and the aeration holes 24; 24b are 5-15 mm, preferably 8-12 mm in diameter. In one embodiment the diameter of the aeration holes 24; 24b and the drainage holes 25; 25b are the same. In a typical case the septic water distribution pipe is 1-10 m long and comprises 10-30 through-holes 23; 24; 24b; 25; 25b per meter.

Given these instructions the skilled person is capable of choosing a suitable diameter of the septic water distribution pipe 14, diameters of the different kind of through holes as well as a through-hole distribution that is appropriate for the size of the septic water system and the expected septic water volumes.

In one embodiment the through-holes 23; 24; 24b; 25; 25b are bevelled after being drilled so that no burrs are formed on the inner surface 14b of the septic water distribution pipe 14. Other production methods that either forms no burrs or removes the burrs after formation may also be used to manufacture a septic water distribution pipe 14.

In one embodiment the outer surface diameter of the septic water distribution pipe 14 is at the second position or positions smaller than the average outer surface diameter of the septic water distribution pipe 14. In such an embodiment the portion of the outer surface where the aeration holes 24; 24b are located is lowered a distance from the adjacent outer surface, i.e. the outer surface with the maximum diameter of the septic water distribution pipe 14 so that if the septic water distribution pipe 14 is covered with e.g. a cloth an air pocket will form above the aeration holes 24; 24b.

In one embodiment, the septic water distribution pipe 14 has a smooth inner surface 14a and a corrugated outer surface 14b, wherein the diameter of the septic water distribution pipe 14 at crests 31 is typically 2-5 cm larger than the diameter at the troughs 32. According to the embodiment depicted in Figure 2a, the through holes are positioned in the troughs 32 and the troughs 32 provided with through holes 23; 24; 24b; 25; 25b are wider than troughs 32 without through holes 23; 24; 24b; 25; 25b. In further embodiments the septic water distribution pipe 14 is composed of semi-rigid polyvinylchloride (PVC), or polyethylene (PE), or any other similar material that is suitable.

The present invention is not limited to the above-described embodiments. Various alternatives, modifications and equivalents may be used. Therefore, the above embodiments should not be taken as limiting the scope of the invention, which is defined by the appending claims.

## Claims

1. A septic water distribution pipe (14) comprising an interior chamber (21) and an entry port (22), an outer surface (14a) and an inner surface (14b) formed by the interior chamber (21), the septic water distribution pipe (14) is during use adapted to be mounted above a treatment bed (13) and to receive septic water via the entry port (22) and to aerate and distribute the septic water onto the treatment bed (13), **characterized in that** the septic water distribution pipe (14) is configured with a side arranged to during use face the treatment bed (13) and with a vertical axis V during use arranged to be perpendicular to regards to the upper surface of the treatment bed (13), and a horizontal axis H perpendicular to the vertical symmetry axis V, and **in that** the septic water distribution pipe (14) comprises;
at least one pair of over-flow holes (23) positioned at a second position along the longitudinal axis C of the septic water distribution pipe (14), each of the over-flow holes (23) extending from the outer surface (14a) to the inner surface (14b) of the septic water distribution pipe (14) and arranged so that in a cross-section B at the second position of the septic water distribution pipe (14), the pair of over-flow holes (23) each are at approximately 90 ± 10° in respect to and on each side of the vertical axis V;
at least a pair of aeration holes (24) positioned at a first position along the longitudinal axis C of the septic water distribution pipe (14), each of the aeration holes (24) extending from the outer surface (14a) to the inner surface (14b) of the septic water distribution pipe (14) and arranged so that in a cross-section A at the first position of the septic water distribution pipe, the pair of aeration holes (24) are positioned at 45 ± 10° and at 135 ± 10°, respectively, in respect to the horizontal axis H at the half of the septic water distribution pipe (14) that during use is arranged to be facing away from the treatment bed (13); and
at least a pair of drainage holes (25) positioned at the first position along the longitudinal axis C of the septic water distribution pipe (14), each of the drainage holes (25) extending from the outer surface (14a) to the inner surface (14b) of the septic water distribution pipe (14) and arranged so that in a cross-section A at the first position of the septic water distribution pipe, the pair of drainage holes (25) are positioned at 45 ± 10° and at 135 ± 10°, respectively, in respect to the horizontal axis H at the half of the septic water distribution pipe (14) that during use is arranged to be facing the treatment bed (13).

2. The septic water distribution pipe (14) of claim 1 further comprising at least one additional aeration hole (24b) and at least one additional drainage hole (25b) positioned at a third position along the longitudinal axis C of the septic water distribution pipe (14), said at least one aeration hole (24b) and said at least one drainage hole (25b) extending from the outer surface (14a) to the inner surface (14b) of the septic water distribution pipe (14) and arranged so that in a cross-section D at the third position of the septic water distribution pipe (14), said at least one aeration hole (24b) and said at least one drainage hole (25b) respectively being at approximately 90 ± 10° in respect to and on each side of the horizontal axis H.

3. The septic water distribution pipe (14) according to claim 1 further comprising at least one additional aeration hole (24b) and at least one additional drainage hole (25b) positioned at the second position along the longitudinal axis C of the septic water distribution pipe (14), said at least one aeration hole (24b) and said at least one drainage hole (25b) extending from the outer surface (14a) to the inner surface (14b) of the septic water distribution pipe (14) and arranged so that in the cross-section B at the second position of the septic water distribution pipe (14), said at least one aeration hole (24b) and said at least one drainage hole (25b) respectively being at approximately 90 ± 10° in respect to and on each side of the horizontal axis H.

4. The septic water distribution pipe (14) according to any of the preceding claims wherein the first position A and the second position B are positioned at a distance of at least 5-30 cm apart along the longitudinal axis C of the septic water distribution pipe (14).

5. The septic water distribution pipe (14) according to any of the preceding claims wherein the outer surface (14a) is corrugated.

6. The septic water distribution pipe (14) according to any of the preceding claims wherein the inner surface (14b) is smooth.

7. The septic water distribution pipe (14) according to any of the preceding claims wherein the diameter of the outer surface (14a) of the septic water distribution pipe (14) at positions comprising aeration holes (24; 24b) is smaller than the average outer surface diameter of the septic water distribution pipe (14).

8. The septic water distribution pipe (14) according to any of the preceding claims wherein the over-flow holes (23), aeration holes (24; 24b) and distribution holes (25; 25b) at the inner surface (14b) of the septic water distribution pipe (14) are deburred.

9. The septic water distribution pipe (14) according to any of the preceding claims wherein the diameter of the septic water distribution pipe (14) is 80-120 mm.

10. The septic water distribution pipe (14) according to any of the preceding claims wherein the diameter of the over-flow holes (23) is 10-20 mm.

11. The septic water distribution pipe (14) according to any of the preceding claims wherein the diameters of the aeration holes (24; 24b) and drainage holes (25; 25b) are 5-15 mm.

12. The septic water distribution pipe (14) according to any of the preceding claims wherein the septic water distribution pipe (14) comprises at least 20 through-holes (23; 24; 24b; 25; 25b) per meter, and wherein the through-holes (23; 24; 24b; 25; 25b) comprises over-flow holes (23), aeration holes (24; 24b) and distribution holes (25; 25b).

13. A domestic septic tank system (10) comprising a septic water distribution pipe (14) of any of the preceding claims, and a treatment bed (13) wherein the septic water distribution pipe (14) is configured with a side facing the treatment bed (13) and with a vertical axis V arranged to be perpendicular to the upper surface of the treatment bed (13).

## Patentansprüche

1. Klärwasserverteilungsrohr (14), umfassend eine Innenkammer (21) und eine Eintrittsöffnung (22), eine Außenfläche (14a) und eine Innenfläche (14b), die von der Innenkammer (21) gebildet werden, wobei das Klärwasserverteilungsrohr (14) während der Verwendung geeignet ist, über einem Behandlungsbett (13) montiert zu werden und Klärwasser über die Eintrittsöffnung (22) aufzunehmen und das Klärwasser zu belüften und auf das Behandlungsbett (13) zu verteilen, **dadurch gekennzeichnet, dass** das Klärwasserverteilungsrohr (14) so konfiguriert ist, dass eine Seite während der Verwendung dem Behandlungsbett (13) zugewandt ist und dass eine vertikale Achse V während der Verwendung so angeordnet ist, dass sie senkrecht zur oberen Fläche des Behandlungsbetts (13) verläuft, und dass eine horizontale Achse H senkrecht zur vertikalen Symmetrieachse V verläuft, und dass das Klärwasserverteilungsrohr (14) Folgendes umfasst;
mindestens ein Paar Überlauflöcher (23), das an einer zweiten Position entlang der Längsachse C des Klärwasserverteilungsrohrs (14) angeordnet ist, wobei sich jedes der Überlauflöcher (23) von der Außenfläche (14a) zur Innenfläche (14b) des Klärwasserverteilungsrohrs (14) erstreckt und so angeordnet ist, dass in einem Querschnitt B an der zweiten Position des Klärwasserverteilungsrohrs (14) das Paar Überlauflöcher (23) jeweils bei ungefähr 90 ± 10° in Bezug auf und auf jeder Seite der vertikalen Achse V liegt;
mindestens ein Paar Belüftungslöcher (24), das an einer ersten Position entlang der Längsachse C des Klärwasserverteilungsrohrs (14) angeordnet ist, wobei sich jedes der Belüftungslöcher (24) von der Außenfläche (14a) zur Innenfläche (14b) des Klärwasserverteilungsrohrs (14) erstreckt und so angeordnet ist, dass in einem Querschnitt A an der ersten Position des Klärwasserverteilungsrohrs das Paar Belüftungslöcher (24) bei 45 ± 10° bzw. bei 135 ± 10° in Bezug auf die horizontale Achse H an der Hälfte des Klärwasserverteilungsrohrs (14) angeordnet ist, die während der Verwendung so angeordnet ist, dass sie von dem Behandlungsbett (13) abgewandt ist; und
mindestens ein Paar Entwässerungslöcher (25), das an der ersten Position entlang der Längsachse C des Klärwasserverteilungsrohrs (14) angeordnet ist, wobei sich jedes der Entwässerungslöcher (25) von der Außenfläche (14a) zur Innenfläche (14b) des Klärwasserverteilungsrohrs (14) erstreckt und so angeordnet ist, dass in einem Querschnitt A an der ersten Position des Klärwasserverteilungsrohrs das Paar Entwässerungslöcher (25) bei 45 ± 10° bzw. bei 135 ± 10° in Bezug auf die horizontale Achse H an der Hälfte des Klärwasserverteilungsrohrs (14) angeordnet ist, die während der Verwendung so angeordnet ist, dass sie dem Behandlungsbett (13) zugewandt ist.

2. Klärwasserverteilungsrohr (14) nach Anspruch 1, ferner umfassend mindestens ein zusätzliches Belüftungsloch (24b) und mindestens ein zusätzliches Entwässerungsloch (25b), die an einer dritten Position entlang der Längsachse C des Klärwasserverteilungsrohrs (14) angeordnet sind, wobei sich das mindestens eine Belüftungsloch (24b) und das mindestens eine Entwässerungsloch (25b) von der Außenfläche (14a) zur Innenfläche (14b) des Klärwasserverteilungsrohrs (14) erstrecken und so angeordnet sind, dass in einem Querschnitt D an der dritten Position des Klärwasserverteilungsrohrs (14) das mindestens eine Belüftungsloch (24b) und das mindestens eine Entwässerungsloch (25b) jeweils in einem Winkel von ungefähr 90 ± 10° in Bezug auf und auf jeder Seite der horizontalen Achse H liegen.

3. Klärwasserverteilungsrohr (14) nach Anspruch 1, ferner umfassend mindestens ein zusätzliches Belüftungsloch (24b) und mindestens ein zusätzliches Entwässerungsloch (25b), die an einer zweiten Position entlang der Längsachse C des Klärwasserverteilungsrohrs (14) angeordnet sind, wobei sich das mindestens eine Belüftungsloch (24b) und das mindestens eine Entwässerungsloch (25b) von der Außenfläche (14a) zur Innenfläche (14b) des Klärwasserverteilungsrohrs (14) erstrecken und so angeordnet sind, dass in dem Querschnitt B an der zweiten Position des Klärwasserverteilungsrohrs (14) das mindestens eine Belüftungsloch (24b) und das mindestens eine Entwässerungsloch (25b) jeweils in einem Winkel von ungefähr 90 ± 10° in Bezug auf und auf jeder Seite der horizontalen Achse H liegen.

4. Klärwasserverteilungsrohr (14) nach einem der vorhergehenden Ansprüche, wobei die erste Position A und die zweite Position B in einem Abstand von mindestens 5-30 cm entlang der Längsachse C des Klärwasserverteilungsrohrs (14) angeordnet sind.

5. Klärwasserverteilungsrohr (14) nach einem der vorhergehenden Ansprüche, wobei die Außenfläche (14a) gewellt ist.

6. Klärwasserverteilungsrohr (14) nach einem der vorhergehenden Ansprüche, wobei die Innenfläche (14b) glatt ist.

7. Klärwasserverteilungsrohr (14) nach einem der vorhergehenden Ansprüche, wobei der Durchmesser der Außenfläche (14a) des Klärwasserverteilungsrohrs (14) an Stellen, die Belüftungslöcher (24; 24b) umfassen, kleiner ist als der durchschnittliche Durchmesser der Außenfläche des Klärwasserverteilungsrohrs (14).

8. Klärwasserverteilungsrohr (14) nach einem der vorhergehenden Ansprüche, wobei die Überlauflöcher (23), Belüftungslöcher (24; 24b) und Verteilungslöcher (25; 25b) an der Innenfläche (14b) des Klärwasserverteilungsrohrs (14) entgratet sind.

9. Klärwasserverteilungsrohr (14) nach einem der vorhergehenden Ansprüche, wobei der Durchmesser des Klärwasserverteilungsrohrs (14) 80-120 mm beträgt.

10. Klärwasserverteilungsrohr (14) nach einem der vorhergehenden Ansprüche, wobei der Durchmesser der Überlauflöcher (23) 10-20 mm beträgt.

11. Klärwasserverteilungsrohr (14) nach einem der vorhergehenden Ansprüche, wobei die Durchmesser der Belüftungslöcher (24; 24b) und der Entwässerungslöcher (25; 25b) 5-15 mm betragen.

12. Klärwasserverteilungsrohr (14) nach einem der vorhergehenden Ansprüche, wobei das Klärwasserverteilungsrohr (14) mindestens 20 Durchgangslöcher (23; 24; 24b; 25; 25b) pro Meter umfasst, und wobei die Durchgangslöcher (23; 24; 24b; 25; 25b) Überlauflöcher (23), Belüftungslöcher (24; 24b) und Verteilungslöcher (25; 25b) umfassen.

13. Häusliches Klärgrubensystem (10), umfassend ein Klärwasserverteilungsrohr (14) nach einem der vorhergehenden Ansprüche und ein Behandlungsbett (13), wobei das Klärwasserverteilungsrohr (14) mit einer dem Behandlungsbett (13) zugewandten Seite und mit einer vertikalen Achse V, die so angeordnet ist, dass sie senkrecht zur oberen Fläche des Behandlungsbetts (13) verläuft, konfiguriert ist.

## Revendications

1. Tuyau de distribution d'eau septique (14) comprenant une chambre intérieure (21) et un orifice d'entrée (22), une surface externe (14a) et une surface interne (14b) formées par la chambre intérieure (21), le tuyau de distribution d'eau septique (14) est en cours d'utilisation adapté pour être monté au-dessus d'un lit de traitement (13) et pour recevoir de l'eau septique par l'intermédiaire de l'orifice d'entrée (22) et pour aérer et distribuer l'eau septique sur le lit de traitement (13), **caractérisé en ce que** le tuyau de distribution d'eau septique (14) est configuré avec un côté agencé pour faire face, en cours d'utilisation, au lit de traitement (13) et avec un axe vertical V en cours d'utilisation agencé pour être perpendiculaire par rapport à la surface supérieure du lit de traitement (13), et un axe horizontal H perpendiculaire à l'axe vertical de symétrie V, et **en ce que** le tuyau de distribution d'eau septique (14) comprend ;
au moins une paire de trous de trop-plein (23) positionnés à une deuxième position le long de l'axe longitudinal C du tuyau de distribution d'eau septique (14), chacun des trous de trop-plein (23) se prolongeant de la surface externe (14a) à la surface interne (14b) du tuyau de distribution d'eau septique (14) et étant agencé de sorte que, dans une section transversale B à la deuxième position du tuyau de distribution d'eau septique (14), la paire de trous de trop-plein (23) sont chacun à environ 90 ± 10° par rapport à et de chaque côté de l'axe vertical V ;
au moins une paire de trous d'aération (24) positionnés à une première position le long de l'axe longitudinal C du tuyau de distribution d'eau septique (14), chacun des trous d'aération (24) se prolongeant de la surface externe (14a) à la surface interne (14b) du tuyau de distribution d'eau septique (14) et étant agencé de sorte que, dans une section transversale A à la première position du tuyau de distribution d'eau septique, la paire de trous d'aération (24) sont positionnés à 45 ± 10° et à 135 ± 10°, respectivement, par rapport à l'axe horizontal H au niveau de la moitié du tuyau de distribution d'eau septique (14) qui, au cours de l'utilisation, est agencée pour être orientée à l'opposé du lit de traitement (13) ; et
au moins une paire de trous de drainage (25) positionnés à la première position le long de l'axe longitudinal C du tuyau de distribution d'eau septique (14), chacun des trous de drainage (25) se prolongeant de la surface externe (14a) à la surface interne (14b) du tuyau de distribution d'eau septique (14) et étant agencé de sorte que, dans une section transversale A à la première position du tuyau de distribution d'eau septique, la paire de trous de drainage (25) sont positionnés à 45 ± 10° et à 135 ± 10°, respectivement, par rapport à l'axe horizontal H au niveau de la moitié du tuyau de distribution d'eau septique (14) qui, lors de l'utilisation, est agencée pour faire face au lit de traitement (13).

2. Tuyau de distribution d'eau septique (14) selon la revendication 1, comprenant également au moins un trou d'aération supplémentaire (24b) et au moins un trou de drainage supplémentaire (25b) positionnés à une troisième position le long de l'axe longitudinal C du tuyau de distribution d'eau septique (14), ledit au moins un trou d'aération (24b) et ledit au moins un trou de drainage (25b) se prolongeant de la surface externe (14a) à la surface interne (14b) du tuyau de distribution d'eau septique (14) et étant agencés de sorte que, dans une section transversale D à la troisième position du tuyau de distribution d'eau septique (14), ledit au moins un trou d'aération (24b) et ledit au moins un trou de drainage (25b) sont respectivement à environ 90 ± 10° par rapport à et de chaque côté de l'axe horizontal H.

3. Tuyau de distribution d'eau septique (14) selon la revendication 1, comprenant également au moins un trou d'aération supplémentaire (24b) et au moins un trou de drainage supplémentaire (25b) positionnés à la deuxième position le long de l'axe longitudinal C du tuyau de distribution d'eau septique (14), ledit au moins un trou d'aération (24b) et ledit au moins un trou de drainage (25b) se prolongeant de la surface externe (14a) à la surface interne (14b) du tuyau de distribution d'eau septique (14) et étant agencés de sorte que, dans une section transversale B à la deuxième position du tuyau de distribution d'eau septique (14), ledit au moins un trou d'aération (24b) et ledit au moins un trou de drainage (25b) sont respectivement à environ 90 ± 10° par rapport à et de chaque côté de l'axe horizontal H.

4. Tuyau de distribution d'eau septique (14) selon l'une quelconque des revendications précédentes, dans lequel la première position A et la deuxième position B sont disposées à une distance d'au moins 5 à 30 cm l'une de l'autre le long de l'axe longitudinal C du tuyau de distribution d'eau septique (14) .

5. Tuyau de distribution d'eau septique (14) selon l'une quelconque des revendications précédentes, dans lequel la surface externe (14a) est ondulée.

6. Tuyau de distribution d'eau septique (14) selon l'une quelconque des revendications précédentes, dans lequel la surface interne (14b) est lisse.

7. Tuyau de distribution d'eau septique (14) selon l'une quelconque des revendications précédentes, dans lequel le diamètre de la surface externe (14a) du tuyau de distribution d'eau septique (14) à des positions comprenant les trous d'aération (24 ; 24b) est inférieur au diamètre de surface externe moyen du tuyau de distribution d'eau septique (14).

8. Tuyau de distribution d'eau septique (14) selon l'une quelconque des revendications précédentes, dans lequel les trous de trop-plein (23), les trous d'aération (24 ; 24b) et les trous de distribution (25 ; 25b) au niveau de la surface interne (14b) du tuyau de distribution d'eau septique (14) sont ébarbés.

9. Tuyau de distribution d'eau septique (14) selon l'une quelconque des revendications précédentes, dans lequel le diamètre du tuyau de distribution d'eau septique (14) est de 80 à 120 mm.

10. Tuyau de distribution d'eau septique (14) selon l'une quelconque des revendications précédentes, dans lequel le diamètre des trous de trop-plein (23) est de 10 à 20 mm.

11. Tuyau de distribution d'eau septique (14) selon l'une quelconque des revendications précédentes, dans lequel les diamètres des trous d'aération (24 ; 24b) et des trous de drainage (25 ; 25b) sont de 5 à 15 mm.

12. Tuyau de distribution d'eau septique (14) selon l'une quelconque des revendications précédentes, le tuyau de distribution d'eau septique (14) comprenant au moins 20 trous traversants (23 ; 24 ; 24b ; 25 ; 25b) par mètre, et dans lequel les trous traversants (23 ; 24 ; 24b ; 25 ; 25b) comprennent des trous de trop-plein (23), des trous d'aération (24 ; 24b) et des trous de distribution (25 ; 25b).

13. Système de fosse septique domestique (10) comprenant un tuyau de distribution d'eau septique (14) selon l'une quelconque des revendications précédentes, et un lit de traitement (13), dans lequel le tuyau de distribution d'eau septique (14) est configuré avec un côté faisant face au lit de traitement (13) et avec un axe vertical V agencé pour être perpendiculaire à la surface supérieure du lit de traitement (13) .
